# EUROPEAN PATENT APPLICATION

(11) **EP 1 093 070 A2**
(43) Date of publication of application: **18.04.2001**
(21) Application number: 00308511.5
(22) Date of filing: 28.09.2000
(51) Int. Cl.: G06F 17/60

(54) **Method and apparatus for dynamic targeting of streaming media using statistical data**

(30) Priority: 30.09.1999 US 409601
(71) Applicant: International Business Machines Corporation, Armonk, NY 10504 (US)
(72) Inventor: Bassett, Ronald W., c/o IBM United Kingdom Ltd., Winchester, Hampshire SO21 2JN (GB); Beadle, Bruce A., c/o IBM United Kingdom Ltd., Winchester, Hampshire SO21 2JN (GB); Brown, Michael Wayne, c/o IBM United Kingdom Ltd., Winchester, Hampshire SO21 2JN (GB); Doud, Leon P., c/o IBM United Kingdom Ltd., Winchester, Hampshire SO21 2JN (GB); Paolini, Michael A., c/o IBM United Kingdom Ltd., Winchester, Hampshire SO21 2JN (GB)
(74) Representative: Waldner, Philip

(57) **Abstract**

A method and apparatus in a data processing system for targeting advertising to a multimedia system. Responsive to receiving user input from the multimedia system, video streams and audio streams are selected from a set of video streams and a set of audio streams for an event, wherein the selected video streams and selected audio streams are formed. An advertisement is selected from a set of advertisements based on the selected video streams and the selected audio streams to form a selected advertisement. The selected advertisement is sent to the multimedia system.

## Description

### BACKGROUND OF THE INVENTION

The present invention relates to the field of computer software and, more particularly, to methods of controlling and providing additional selective overlays in a streaming media.

With current broadcast media information is typically broadcast in mass, often to many people who have no interest in the information. Because, for any individual, so much of the information is of little or no interest, much wanted information is lost in the information overflow from unwanted sources.

Furthermore, with traditional media and in some respects, advertisers and content providers lack an ability target specific viewers within an audience to specifically target advertisements to specific individual viewers. Additionally, methods of determining the viewing tastes of and gathering feedback regarding programming preferences from individual viewers is crude at best. Methods for finding out what a viewer is doing and/or what a viewer wants to hear or see over any given point in time are absent. The best methods currently available merely target programming and advertising to particular demographics based on rough statistics of what kind of individual is likely to be enjoy a particular program type. Even if advertisers and content providers had the desired information regarding what a viewer wants to hear or see, a mechanism for changing the content on a viewer by viewer basis is absent. Presently available mechanisms for controlling the media delivered to viewers does not allow for fine tuning to customize content to each individual.

Therefore, it would be advantageous to have a method and apparatus to provide advertisements to viewers in which the advertisements are selectively tailored to effectively capture the viewer's attention.

### SUMMARY OF THE INVENTION

According to a first aspect of the invention there is provided a method in a data processing system for targeting advertising to a multimedia system, the method comprising: responsive to receiving user input from the multimedia system, selecting video streams and audio streams from a set of video streams and a set of audio streams for an event, wherein selected video streams and selected audio streams are formed; selecting an advertisement from a set of advertisements based on the selected video streams and the selected audio streams to form a selected advertisement; and sending the selected advertisement to the multimedia system.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** is a diagram of a distributed data processing system in which the present invention may be implemented in accordance with a preferred embodiment of the present invention;
**Figure 2** is a block diagram of a data processing system, which may be implemented as a server system in accordance with the present invention;
**Figure 3** is a block diagram of a data processing system in which the present invention may be implemented;
**Figure 4** is a block diagram broadly illustrating the process of the present invention;
**Figure 5** is a block diagram of functional components used in the selection of media streams in accordance with the present invention;
**Figure 6** is a diagram illustrating an example display in accordance with a preferred embodiment of the present invention;
**Figures 7A-7D** are diagrams illustrating data structures contained within data streams sent to a client in accordance with a preferred embodiment of the present invention;
**Figure 8** is a flowchart of a process used to process data streams in accordance with a preferred embodiment of the present invention;
**Figure 9** is a flowchart of a process for generating CRC values for use in synchronizing data streams in accordance with a preferred embodiment of the present invention;
**Figure 10** is a flowchart of a process for synchronizing data streams using CRC data in accordance with a preferred embodiment of the present invention;
**Figure 11**, is a flowchart of a process for filtering data in accordance with a preferred embodiment of the present invention;
**Figure 12** is a flowchart of a process to customize a program for a user in accordance with a preferred embodiment of the present invention;
**Figure 13** is a flowchart of a process for retrieving user selection information in accordance with a preferred embodiment of the present invention;
**Figure 14** is a flowchart of a process for creating a profile in accordance with a preferred embodiment of the present invention; and
**Figure 15** is a flowchart of a process for creating an advertising data stream in accordance with a preferred embodiment of the present invention.

### DETAILED DESCRIPTION OF THE PREFERRED EMBODIMENT

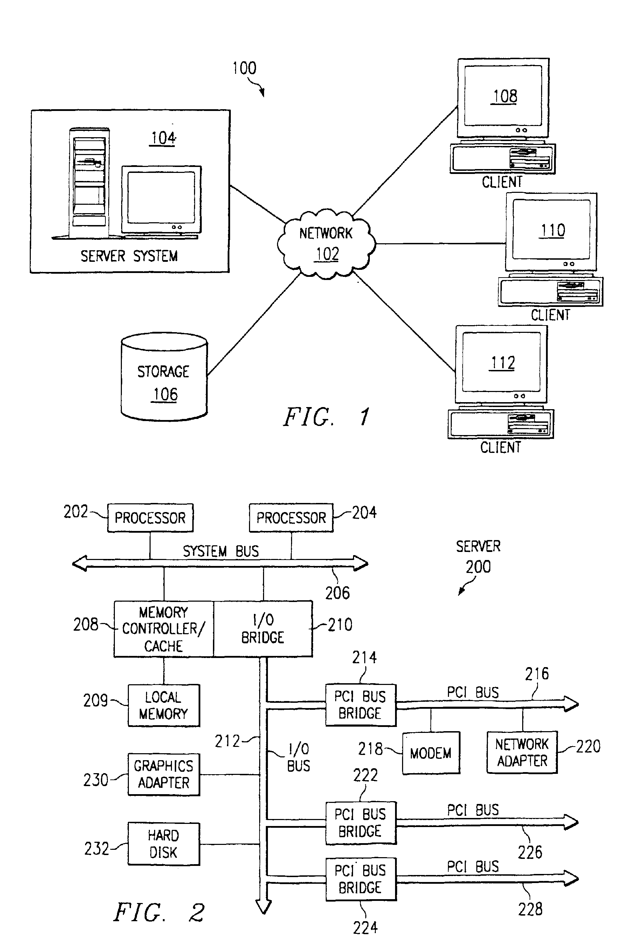

With reference now to the figures and in particular with reference to **Figure 1**, a diagram of a distributed data processing system in which the present invention may be implemented is depicted in accordance with a preferred embodiment of the present invention. Distributed data processing system **100** contains network **102**, which is the medium used to provide communications links between various devices and computers connected within distributed data processing system **100**. Network **102** may include permanent connections, such as wire or fiber optic cables, or temporary connections made through telephone connections.

In the depicted example, server system **104** is connected to network **102**, along with storage unit **106.** Server system **104** may contain one or more server computers for providing data streaming. For example, a server may be used to administer and control data streams while another server within server system **104** is employed to originate resource data streams to clients. The information in these data streams may be stored within server system **104** or on a remote storage device, such as storage device **106**. In addition, clients **108**, **110** and **112** are also connected to network **102**. These clients, **108**, **110** and **112**, may be, for example, without limitation, personal computers, set top boxes, web TV units, or any other hardware unit for receiving data streams. Clients **108**, **110** and **112** are clients to server system **104**. In the depicted example, server system **104** provides data streams to clients **108**-**112**. Distributed data processing system **100** may include additional servers, clients, and other devices not shown.

Clients **108**, **110**, and **112** include mechanisms for mixing and filtering data streams received from server system **104** or other server systems not shown. These mechanisms may be implemented in hardware, software, firmware, or some combination thereof in the depicted examples.

Distributed data processing system **100** may be, for example, the Internet, with network **102** representing a worldwide collection of networks and gateways that use the TCP/IP suite of protocols to communicate with one another. At the heart of the Internet is a backbone of high-speed data communication lines between major nodes or host computers consisting of thousands of commercial, government, education, and other computer systems that route data and messages.

Another implementation for network **102** is as a broadband network, also referred to as a broadband integrated services digital network (BISDN). In such a network, broadband services typically provide channels capable of supporting data transmission rates of greater than 1.5Mbps or a primary rate in integrated services digital network (ISDN), T1, or DS1. In broadband system, the type of transfer mode typically is a synchronous transfer mode (ATM) with the use of synchronous optical network (SONET) and intelligent network (IN) technologies as providing the framework for ISDN. In such a network, information including voice, data, video, and audio are transferred through the network to various clients.

Further, network **102** also may be a cable communications system depending on the implementation. Of course, distributed data processing system **100** also may be implemented as a number of different types of networks such as, for example, an intranet or a local area network. **Figure 1** is intended as an example and not as an architectural limitation for the processes of the present invention.

Referring to **Figure 2**, a block diagram of a data processing system, which may be implemented as a server system, such as server system **104** in **Figure 1**, is depicted in accordance with the present invention. Data processing system **200** may be employed as a video server or other application server within a server system.

Data processing system **200** may be a symmetric multiprocessor (SMP) system including a plurality of processors **202** and **204** connected to system bus **206**. Alternatively, a single processor system may be employed. Also connected to system bus **206** is memory controller/cache **208**, which provides an interface to local memory **209**. I/O bus bridge **210** is connected to system bus **206** and provides an interface to I/O bus **212**. Memory controller/cache **208** and I/O bus bridge **210** may be integrated as depicted.

Peripheral component interconnect (PCI) bus bridge **214** connected to I/O bus **212** provides an interface to PCI local bus **216**. A number of modems **218-220** may be connected to PCI bus **216**. Typical PCI bus implementations will support four PCI expansion slots or add-in connectors. Communications links to network computers **108-112** in **Figure 1** may be provided through modem **218** and network adapter **220** connected to PCI local bus **216** through add-in boards.

Additional PCI bus bridges **222** and **224** provide interfaces for additional PCI buses **226** and **228**, from which additional modems or network adapters may be supported. In this manner, server **200** allows connections to multiple network computers. A memory mapped graphics adapter **230** and hard disk **232** may also be connected to I/O bus **212** as depicted, either directly or indirectly.

Those of ordinary skill in the art will appreciate that the hardware depicted in **Figure 2** may vary. For example, other peripheral devices, such as optical disk drives and the like, also may be used in addition to or in place of the hardware depicted. The depicted example is not meant to imply architectural limitations with respect to the present invention.

The data processing system depicted in **Figure 2** may be, for example, an IBM RS/6000, a product of International Business Machines Corporation in Armonk, New York, running the Advanced Interactive Executive (AIX) operating system.

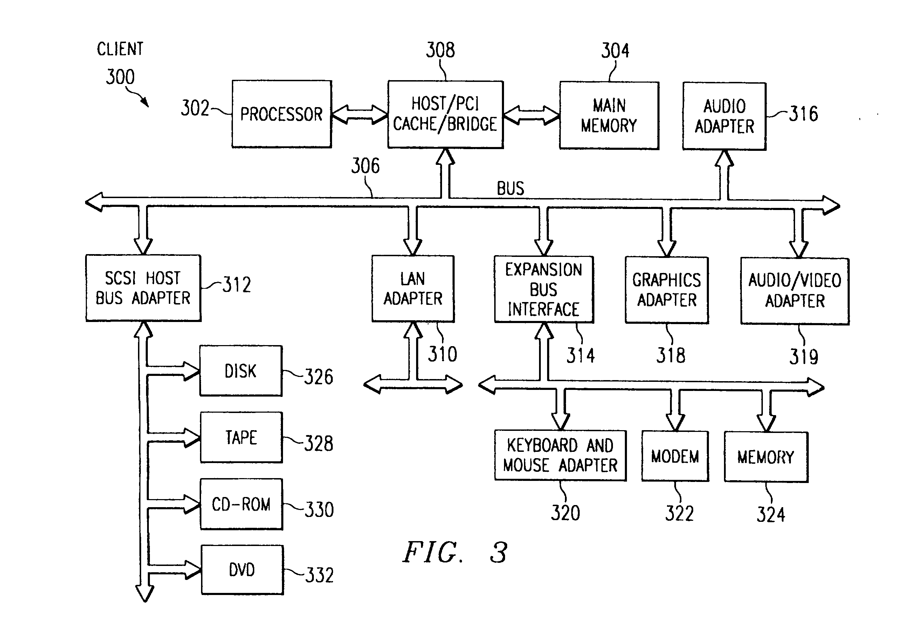

With reference now to **Figure 3**, a block diagram of a data processing system in which the present invention may be implemented is illustrated. Data processing system **300** is an example of a computer. Data processing system **300** employs a peripheral component interconnect (PCI) local bus architecture. Although the depicted example employs a PCI bus, other bus architectures, such as Micro Channel and ISA, may be used. Processor **302** and main memory **304** are connected to PCI local bus **306** through PCI bridge **308**. PCI bridge **308** may also include an integrated memory controller and cache memory for processor **302**. Additional connections to PCI local bus **306** may be made through direct component interconnection or through add-in boards. In the depicted example, local area network (LAN) adapter **310**, SCSI host bus adapter **312**, and expansion bus interface **314** are connected to PCI local bus **306** by direct component connection. In contrast, audio adapter **316**, graphics adapter **318**, and audio/video adapter (A/V) **319** are connected to PCI local bus **306** by add-in boards inserted into expansion slots. Expansion bus interface **314** provides a connection for a keyboard and mouse adapter **320**, modem **322**, and additional memory **324**. In the depicted example, SCSI host bus adapter **312** provides a connection for hard disk drive **326**, tape drive **328**, CD-ROM drive **330**, and digital video disc read only memory drive (DVD-ROM) **332**. Typical PCI local bus implementations will support three or four PCI expansion slots or add-in connectors.

An operating system runs on processor **302** and is used to coordinate and provide control of various components within data processing system **300** in **Figure 3**. The operating system may be a commercially available operating system, such as OS/2, which is available from International Business Machines Corporation. "OS/2" is a trademark of International Business Machines Corporation. An object oriented programming system, such as Java, may run in conjunction with the operating system, providing calls to the operating system from Java programs or applications executing on data processing system **300**. Instructions for the operating system, the object-oriented operating system, and applications or programs are located on a storage device, such as hard disk drive **326**, and may be loaded into main memory **304** for execution by processor **302**.

Those of ordinary skill in the art will appreciate that the hardware in **Figure 3** may vary depending on the implementation. For example, other peripheral devices, such as optical disk drives and the like, may be used in addition to or in place of the hardware depicted in **Figure 3**. The depicted example is not meant to imply architectural limitations with respect to the present invention. For example, the processes of the present invention may be applied to multiprocessor data processing systems. Additionally, data processing system **300** may take the form of a notebook computer or a personal digital assistant (PDA). Further, the data processing system may be, for example, without limitations, a television or settop cable box containing appropriate hardware and software for implementing processes of the present invention.

The present invention provides a method, apparatus, and computer implemented instructions for decreasing bandwidth usage and for providing increased client customization of programs or events. The mechanism of the present invention is directed towards tailoring a multimedia presentation on a multimedia data processing system. This is accomplished by breaking up a program or event into different data streams for different audio and video components. Additional optional data streams may be added to allow for customization of the program or event. A data processing system may receive a set of video and audio streams associated with a program or event. These data streams may be selectively presented based on user input. Depending on the user input, some portions of the video and audio data streams may be presented while other data streams are unrepresented. Further, user input may selectively place a video stream on a display in different locations. Also, information streams containing text and/or graphics may be received and selectively displayed in association with the presentation of the program or event. The combination of these data streams at the user site provides for customization without requiring broadcasting of multiple versions of an event to viewers.

By allowing a viewer to customize a program or event, bandwidth usage may be reduced because program originators do not have to broadcast multiple versions of a program or event for different geographical regions or different viewer basis.

More specifically, the present invention provides a mechanism to allow a content provider to provides programs or events to user in the form of multiple data streams. The mechanism of the present invention allows a content provider to control data streams sent to a user based on input and other data received from a user. The user information may take the form of a profile, which contains information about selections made by a user. The profile also may contain other information such as location and demographic information that may or may not be used in tailoring and customizing a program for a user. Specifically, the present invention allows an advertiser or a content provider to customize advertisements on a per viewer basis using profiles retrieved or received from viewer systems. In this manner a data stream may be selected for a particular viewer in which the advertisement in the data stream is selected based on information gathered about the viewer based on selections made and preferences set. By periodically retrieving or receiving profiles from viewers, a content provider may identify what a viewer wants to hear and see over any given point in time.

The present invention also provides a mechanism for presenting data streams on a user system that the content provider feels is important for the user to see or hear even though the user may not have selected these data streams. For example, an embedded command may be included in the data streams sent to the user to cause a multimedia system to present a data stream, which is an advertising data stream that the content provider wants presented even though the user may not have selected that particular data stream.

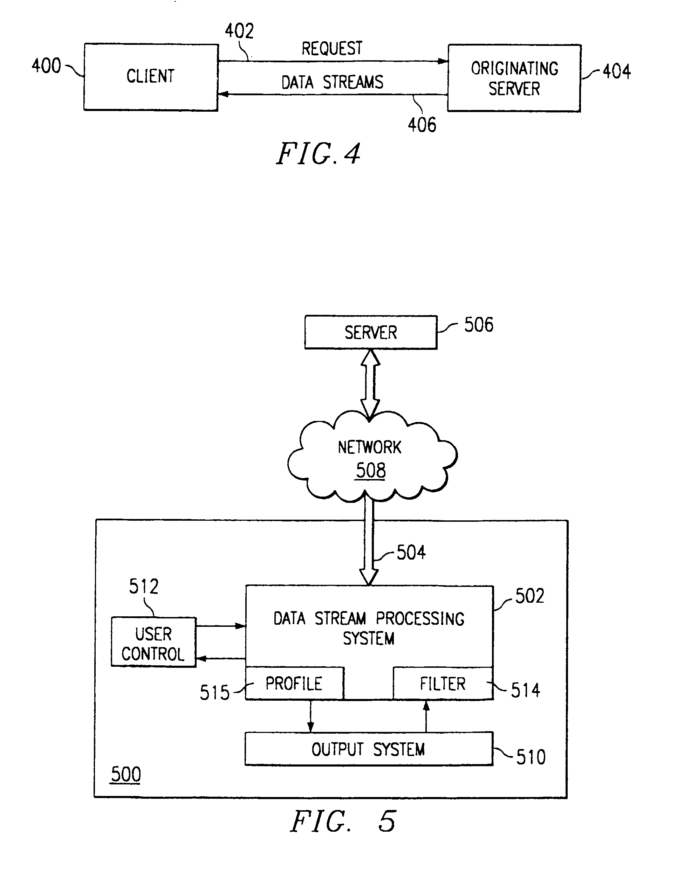

Turning now to **Figure 4**, there is shown a block diagram broadly illustrating the process of the present invention. A client **400**, such as data processing system **300** in **Figure 3**, sends a request **402** for programming content to an originating server **404**. Originating server **404** is a data processing system, such as data processing system **200** in **Figure 2**, and is the host for the programming content requested by client **400**. Originating server **404** sends the requested programming as a set of data streams **406** back to client **400**. Data streams **406**, may be used to present programming or events to a user at client **402**. Furthermore, data streams **406** may comprise one or more video stream components, one or more information stream components, and one or more audio stream components.

Client **400** and originating server **404** have been described and illustrated in **Figure 4** as though they are directly connected. However, client **402** and originating server **404** are preferably part of a distributed data processing system such as distributed data processing system **100** and are linked together via a network, such as network **102** in **Figure 1**.

The environment illustrated in **Figure 4** may be a one way environment or a two way environment. In a one way environment, the server sends data to the client, but does not receive data from the client. In this case, a client receives a full range of data streams from the server. A filter is used to allow data streams selected by the user to be presented while non selected data streams remain unexposed to the user. A profile about the user may be created base on the user input. This profile contains customization information based on user input as well as information about the user at the client. This information may include, for example, an identification of preferences, data stream selections, as well as circumstantial information, such as location.

In a two way environment, the server sends data to the client and the client sends data back to the server. In such an environment the server for the content provider sends only selected data streams to the client based on a profile received from the client.

Turning next to **Figure 5**, a block diagram of functional components used in the selection of media streams in accordance with the present invention is depicted. In this example, client **500** includes a data stream processing system **502** to receive data streams **504** from a server **506** through network **508** for output to output system **510**. Server **506** in this example is a source for content from a content provider. The selection of data streams received from network **504** are controlled through user control **512**, which controls data stream processing system **502**. User control **512** is used to manipulate or adjust filter **514**, which filters data streams **504** in data stream processing system **502** to selectively present data streams **504** on output system **510**. Also present in data streaming processing system **502** is a profile **515**, which may be generated based on user preference setting, data stream selections, and filters applied. Profile **515** also may include other information, such as, for example, the geographic location of client **500**. For example, profile **515** may include information identifying current volume settings at client **500**. A low volume setting below some threshold may indicate that the users are not really watching or paying attention to the event.

Profile **515** may be sent to or retrieved by a content provider for use in identifying advertising, which would appeal to the viewer. Profile **515** may be obtained on a continual basis as a user selects data streams and sets preferences so that the content provider is able to dynamically identify changes in viewer preferences and tailor or select advertising based on those identified changes.

Multiple data streams may be received from network **504** through connection **508**. These data streams may be, for example, audio, video, text, graphics, or other information that may be displayed through output system **506** to a user of client **500**. Selection filtering of data streams from network **504** by data stream processing system **502** are controlled through user control **508**. The selected data stream or selected portions of data streams are displayed to user through output system **506**, which may be used to drive displays and audio output devices, such as a high definition television or speakers. Further, video streams may be configured for parameters, such as, for example, opacity and scaling.

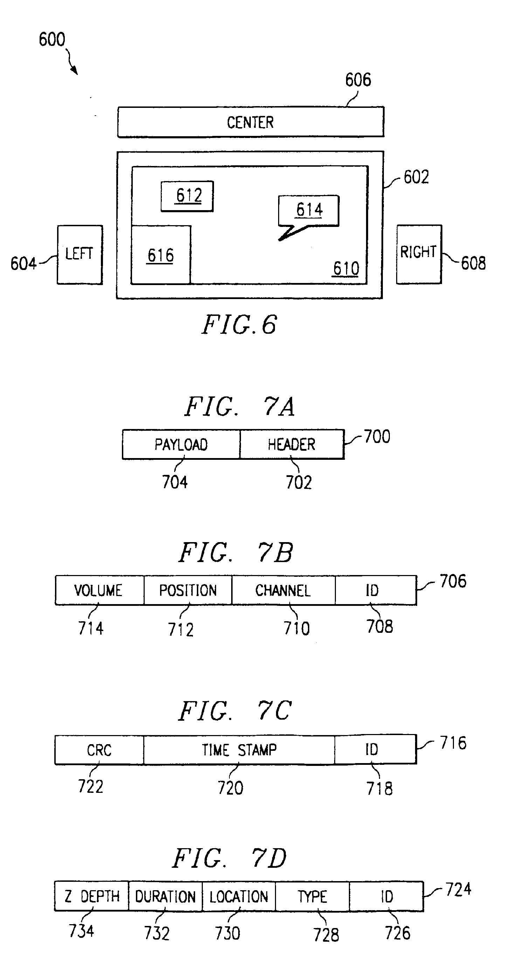

With reference now to **Figure 6**, a diagram illustrating an example display is depicted in accordance with a preferred embodiment of the present invention. In this example, a presentation system **600** is presented with a display unit **602**, audio sources **604**, **606**, and **608**. Presentation system **600** is the part of a client through which the user sees and hears programs. In this example, audio source **604** is a left speaker while audio source **608** is a right speaker. Audio source **606** is the center speaker in this example. The video **610** is displayed in display **602** with text box **612**, text box **614**, and video **616**. Video **610** is the primary data stream in this example with text box **612** and text box **614** being overlaid over video **610**.

Text box **612** and text box **614** are generated from two data streams in this example. Text box **612** is a stationary text box, which may be used to provide information, such as statistics about the program, upcoming programs, or any other information the user may select. Text box **614** in this example is a "pop-up," which may be used to provide information about a particular object or person in video **610**.

Additionally, the data packets in text box **614** may include data to reposition text box **614** to follow a particular object or person. Video **616** is displayed using another data stream to provide additional viewing for the user. For example, video **616** may provide different perspectives in the program or may illustrate scene not currently displayed within video **610**. Initially, the user may select various audio streams for feed through **604**, **606**, and **608**. For example, if the programming being displayed is a sporting event, the user might select a particular player and have audio information about that player played over **608** or have direct feeds from a microphone located on the player played through **604**.

By way of example, consider a football game being broadcast across the Internet or a broadband network. The end user is able to select from and mix several audio streams. For example, the quarterback microphone of either team, the coach's microphone of either team, and/or the announcers, of which, there could be several (e.g., John Madden, Phil Simms, Howie Long, Bruce Beadle, Michael Paolini, etc.). In this manner, the user is able to tune-out (deselect) John Madden if they find him offensive. The user might instead choose to listen to the Quarterback microphone of the 49er's (or the opposing team, or another announcer of their choice, or to listen in another language entirely) without having to change the channel/coverage.

Carrying the football example further, with the present invention, it is possible to have a separate audio track for viewers that are new to the sport. This separate audio track would explain the rules of the game and what is happening in additional detail. It would also explain the technical jargon particular to football. The user may choose to have this additional information presented as a text stream.

In yet another example of the use of the present invention, continuing with the football theme, the user could place team A's player voices on the right channels with team B's player voices on the left channels and the announcers' voices on the rear channels. Furthermore, the user could select the player with the ball such that this player's voice is always on the center channel.

One primary data stream representing the video (which does not change no matter which audio overlay streams are selected), and many small add-on data streams representing audio or video overlays may be used to present the program. These streams could be mixed together or assigned to channels (right, left, rear, center, etc.) and/or 3-D positional locations using the latest "Dolby Digital" from Dolby Laboratories and other similar technologies. In addition, the volume could be adjusted on a per-overlay basis. More information on technologies, such as "Dolby Digital" may be found in United States Patent No. 5,912,976.

With respect to video overlays, several video overlays can also be streamed and selected in a manner similar to the audio streaming and mixed to "overlay" the final video. If, for example, the desired overlay was a balloon shaped pop-up at a certain video display position containing some text, then the additional overlay stream would not have to be video itself, but rather the information to create the overlay video. Therefore, the size of the data stream would be much, much smaller than a primary video stream. Additionally, unrelated information in addition to the data streams selected for an event, such as, for example, stock market data or news headlines also may be provided to the user. If, for example, the event or programming being viewed is that of a football game, it is possible to have a video overlay stream dedicated to displaying pop-up balloons with data, such as statistics on players in which these pop-up balloons may appear over the players themselves. Additionally, betting odds, other interesting facts about the players, or rules and information about events may be displayed in this manner. Another type of data stream may include embedded pictures of players with biographies tagged on as well.

For other types of programming, other pop-up windows may be provided. For example, for a murder mystery show, pop-up windows giving clues about future events may be displayed or facts about actors, the script, or director also may be displayed in association with the program.

In this manner, in the context of the football game example, it is possible to have video overlay streams dedicated to displaying pop-up balloon(s) with data such as: statistics on players (they very well might appear over the players themselves), betting odds, odd or interesting facts, information explaining what is happening and rules (for novices), a summary of different on-going sporting event data (such as scores and statistics from other games in progress), stock market data, and news headlines to provide but a few examples. Another stream type might contain embedded pictures of the players with bios tagged on as well.

In another embodiment, it is possible to make the overlays selectable. That is to say that the user might do the equivalent of "clicking" on one, to trigger additional overlay streams, or lock it in place. For example, selecting a player's "name overlay" might for example bring up an overlay with that player's biography. In a one-way system, this could be done by having an overlay channel which continually cycles through all the players biographies, and having the client "select" the one of interest at the time of broadcast.

Additionally, the user could select between the different options using their client and thus have a lot more control of the information they would like to see and hear during a broadcast.

Based on these different user preferences and selections, a profile is created for use in identifying and customizing advertising for a viewer. To illustrate the selection of advertisements using the present invention the example of customization of a football game is used. For example, a viewer is watching a football game in which the user has selected to hear the audio from team X's coach, a video angle over the defensive line, and the audio from fans in the stadium playing in the background. From this selection, the content provider may determine that this viewer fits a certain profile and send this viewer a dynamically selected targeted advertisement. This target advertisement may be presented, for example, via changing the audio and/or visual streams, playing additional audio streams, or sending a video overlay that scrolls across the screen. The manner in which the advertisement is sent is selected to match current profile.

This type of targeting of streaming media also increases the effectiveness of the information. Not only can the correct audience for the information be found, but the best mode of presentation of the information also can be identified from the profile information. Based on a profile, information may be presented in different forms that the viewer can easily understand.

For example, a viewer may be watching a football game with a statistic preference selected for the filter and a preference for receiving information about a particular team or player. Targeted advertisement has more of an impact because not only because the advertisement is targeted for a football fan, but also for a football fan that responds to numbers (information inferred from the statistics preference in use by the viewer), and a football fan that is a fan of a team or player (again inferred from the preference set for the filter in use).

As a result, if, for example, several commercials are available for advertising a car in which one of the advertisements features an emotional appeal and one which features an intellectual appeal via comparing numbers with two variations each - each with a spokesman from each team playing, then for the viewer in the example, the selected advertisement presented would be the one presenting the statistical information with the spokesman from the viewer's preferred team.

Also, by using profile information, customer feedback can be supplied to vendors supplying the streaming media. In other words, the consumption of media can be measured in real time allowing dynamic reconfiguration of broadcast material. For example, if more viewers are receiving a data stream of a certain type more than others, then, perhaps, more variations of that type of data stream should be made available. If more viewers like trivia relating to a program, then more content containing trivia should be made available. If more people listen to different audio streams than watch video overlays, then it is justified to invest more money for audio streams.

Turning now to an example of the present invention in which the profile is provided indirectly instead of through input or selection by a user. Consider, a situation in which the user profile is created by the viewer current situation. For example, perhaps a person is driving in a car equipped with a global positioning system (GPS) such as The NorthStar System from General Motors Corporation in which information on the current location is fed into the client as a filter preference. The parts of the map that is shown on a heads up display, or the advertisement on the audio stream being received, using the present invention, would be based on the location filter as well as any other preferences. For example, a stream containing an advertisement for a restaurant or other attraction may be sent to the client when the car is within a specified distance from the restaurant or attraction.

Turning now to **Figures 7A-7D**, diagrams illustrating data structures contained within data streams sent to a client are depicted in accordance with a preferred embodiment of the present invention. In **Figure 7A**, a data packet **700** is shown in which the data packet includes a header **702** and a payload **704**. Header **702** contains information used in routing and handling data contained within payload **704** of data packet **700**.

In **Figure 7B**, an example of header information found within a data packet, such as data packet **700**, is shown. In this example, header **706** includes an ID field **708**, a channel field **710**, a position field **712**, and a volume field **714**.

In this example, header **706** is a header identifying an audio packet. ID field **708** is used to identify the type of data packet. Channel field **710** in this example may be used to identify the channel or channels in which the data packet is to be presented to the user. For example, channel field **710** may be used to identify channels such as those in a surround system. The channels may be, in this example, right, left, rear, or center. Additionally, position field **712** also is included such that three dimensional positional locations using sound technologies such as Dolby Digital may be employed. This positional information may provide a default positioning that may be altered by a user. Volume field **714** is included to allow for adjusting the volume of the data in this data packet relative to other data packets to allow for overlays or emphasis for different data streams. Other fields may be used in addition to or in place of fields shown in header **706** for presenting audio information.

In **Figure 7C**, a header **716** is an example of header information found in a video packet used in a video stream. In this example, header **716** includes an ID field **718**, a time stamp field **720**, and a CRC field **722**. ID field **718** is used to identify the type of data contained within the packet, while time stamp **720** in this example is used for synchronization purposes. CRC field **722** may be used for error checking or synchronization purposes depending upon the implementation. If CRC field **722** is used for synchronization purposes, the CRC data is calculated for another data stream and placed within this field prior to being transmitted or broadcast to a viewer. The CRC data may be, for example, calculated for a frame or a portion of a frame in the other data stream. When this data stream and the other data stream are received, CRC data is calculated for a frame in the other data stream. This calculated CRC data is compared with the CRC data stored in CRC field **722**. Matches between these CRC values are used to identify synchronization points between the two data streams.

Next, in **Figure 7D**, another example of a header used for data packets in a video stream is illustrated. Header **724** includes an ID field **726**, a type field **728**, a location field **730**, a duration field **732**, and a z depth field **734**. ID field **726** is used to identify the data packet as containing video data. Type field **728** in this example may be used to identify the type of video, such as text, or a frame in a moving video stream. Location field **730** may be used to identify the location on the screen at which the data is to be displayed. Duration field **732** may identify the amount of time the data is to be displayed. Z depth field **734** may be used to identify the depth or order in which the data is to be displayed relative to other video streams.

In the example, header **724** is an example of a header used for a video stream containing text to be displayed as a balloon or pop-up on the screen. In this case, duration field **732** identifies how long the text is to be displayed while the z depth field **734** identifies where the text is to be located with respect to other video streams. The Z depth is used to determine the order in which video streams or overlays are displayed on the display. Location field **730** provides the xy location on the screen. In the text for display in the pop-up would be found in the payload. In this manner, a video overlay stream dedicated to displaying text, may be used along with moving video data streams.

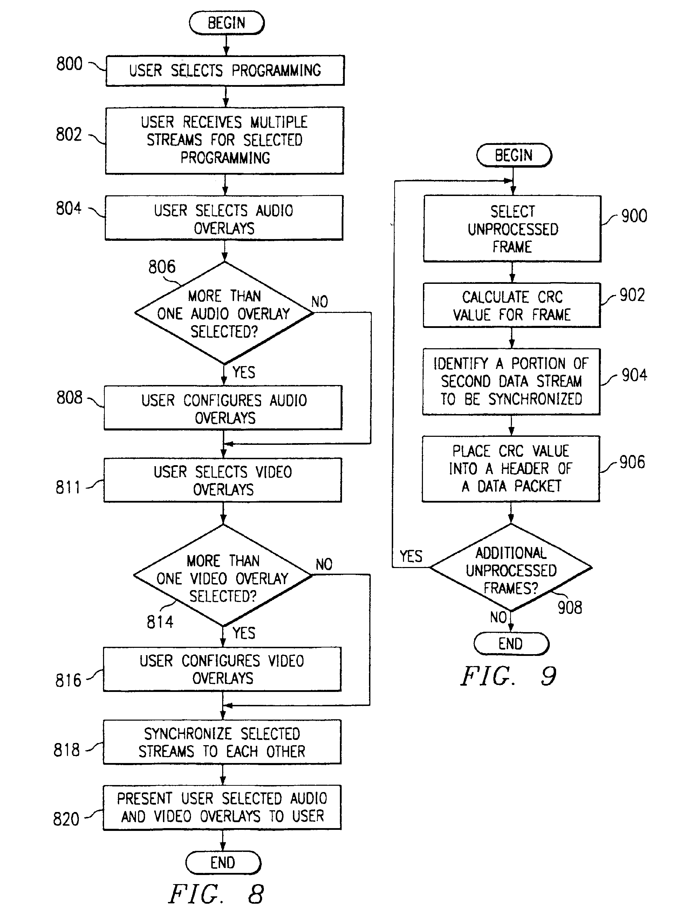

Turning now to **Figure 8**, a flowchart of a process used to process data streams is depicted in accordance with a preferred embodiment of the present invention. To start, a user selects programming to be retrieved from a distributed database (step **800**). The user receives multiple video and audio streams corresponding to the selected program (step **802**). The user selects audio streams (step **804**), either directly in real time or through the use of user defined configurations, and, if more than one audio stream is selected (step **806**), then the user configures the presentation profile for the selected audio streams (step **808**). For example, if three audio streams are chosen, the user could configure the system to play one audio stream on the left channel, one audio stream on a center channel, and one audio stream on a right channel. Alternatively, the user could configure the presentation of the selected audio streams such that the volume of one audio stream is louder than the volume of the other two audio streams.

Next, the user selects, from the plurality of video streams received, one or more video streams to be displayed (step **811**). If more than one video stream is selected (step **814**), then the user configures the presentation of the multiple video streams (step **816**). For example, one video stream could be presented on the left side of the video display and a second video stream could be presented on the right side of the video display. In another example, one video stream might occupy the entire video display screen, while a second video stream was placed in a smaller window within the first video stream. Also, video streams are configurable for such things as opacity and scaling, as well as other factors. Opacity is the semi-transparency as seen in menus overlaid on an event in which the event can be seen through the menu. Scaling may be employed to size display of a video stream on a display device.

Once the media streams are selected and configured by the user, the audio and video streams are synchronized to each other (step **818**) and presented to the user in a user configured manner (step **820**).

With reference again to step **806**, if more than one audio stream is not selected, then the user selects, from the plurality of video streams received, one or more video streams to be displayed (step **811**). With reference again to step **814**, if more than one video stream is not selected, the audio and video streams are synchronized to each other (step **818**) and presented to the user in a user configured manner (step **820**).

Several mechanisms may be employed to synchronize the data streams. For example, a time stamp may be sent with each packet of data in each media stream, then each selected data stream is synchronized to be presented to the user such that data packets with identical time stamps are presented at the same time.

Each data stream also may contain a spike in the data that appears at a periodic rate. The spike in the data may be, for example, a data packet that contains no video or audio. Further, each data stream contains a larger spike that appears at a longer periodic rate. For example, the shorter spike may appear every 30 frames wherein the larger spike appears every 10 seconds. The selected data streams may be synchronized such that they are presented to the user such that the spikes appear in the data streams simultaneously. The longer spike enables the system to resynchronize itself periodically if the data streams have become separated by a period of one or two smaller data spikes.

In a third method of synchronization, cyclic redundancy check (CRC) values. Synchronizing data streams using a CRC data involves calculating CRC data for a first data stream and placing those calculated values in the headers of data packets in the second data stream. The CRC values are placed in data packets in the second data stream that should be synchronized with data packets in the first data stream.

Turning to **Figure 9**, a flowchart of a process for generating CRC values for use in synchronizing data streams is depicted in accordance with a preferred embodiment of the present invention. The process illustrated is used for video streams, but may be applied to other types of data streams.

The process begins by selecting an unprocessed frame (step **900**). This step selects the first unprocessed frame for content that will be transmitted as a data stream. A CRC value is then calculated for the frame (step **902**). The CRC value may be calculated for an entire frame or different portions of the frame. For example, the CRC value may be based on the first five bytes of the frame, five bytes in the middle of the frame, and the last five bytes in the frame.

Next, the portion of a second data stream that is to be synchronized with this frame is identified (step **904**). The CRC value is then placed into the header of a data packet for that portion of the data stream (step **906**). A determination is then made as to whether additional unprocessed frames are present for processing (step **908**). If additional unprocessed frames are present, the process returns to step **900**. Otherwise, the process terminates. The process in **Figure 9** may be used when the data streams are transmitted or broadcast. Alternatively, these processes may be initiated prior to transmitting or broadcasting a data stream. In such a case, the CRC values may be stored and added to the second data stream when that data stream is transmitted.

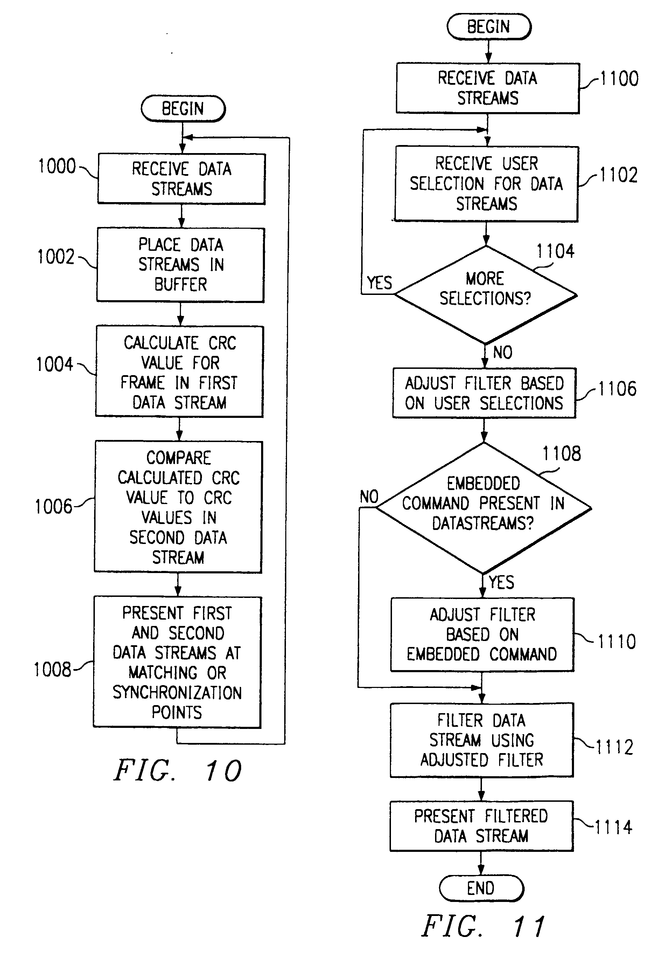

Turning now to **Figure 10**, a flowchart of a process for synchronizing data streams using CRC data is depicted in accordance with a preferred embodiment of the present invention. The processes illustrated in **Figure 9** may be implemented at the viewer site to synchronize incoming data streams for presentation of a program or event.

The process begins by receiving data streams (step **1000**). In step **1000**, the data streams are received for presentation. These data streams are placed in a buffer prior to presentation (step **1002**). A CRC value is calculated for a frame in the first data stream stored in the buffer (step **1004**). Thereafter, the calculated CRC value is compared to CRC values in the second data stream stored in the buffer to identify a point in the second data stream containing a matching CRC value (step **1006**). In the depicted examples, CRC values are placed within headers in the second data stream at points where the CRC value should match a calculated CRC value from a portion of the first data stream. Thereafter, the first and second data stream are presented at the matching or synchronization points (step **1008**) with the process then returning to step **1000**. The present invention could be implemented via one-way or two-way communication depending on the bandwidth of the network type in use.

Thus, the present invention provides a customized experience for a user. The present invention provides this customized experience by providing a number of different types of data streams, audio and video, which are delivered to a client in which the client may select from these data streams to customize the program or event being viewed by the user. Further, the present invention allows for decreasing the amount of bandwidth needed to provide customized programming. This advantage is provided by sending data streams that may be selectively presented for a customized program or event, rather than creating a new data stream for each desired customization of a program or event.

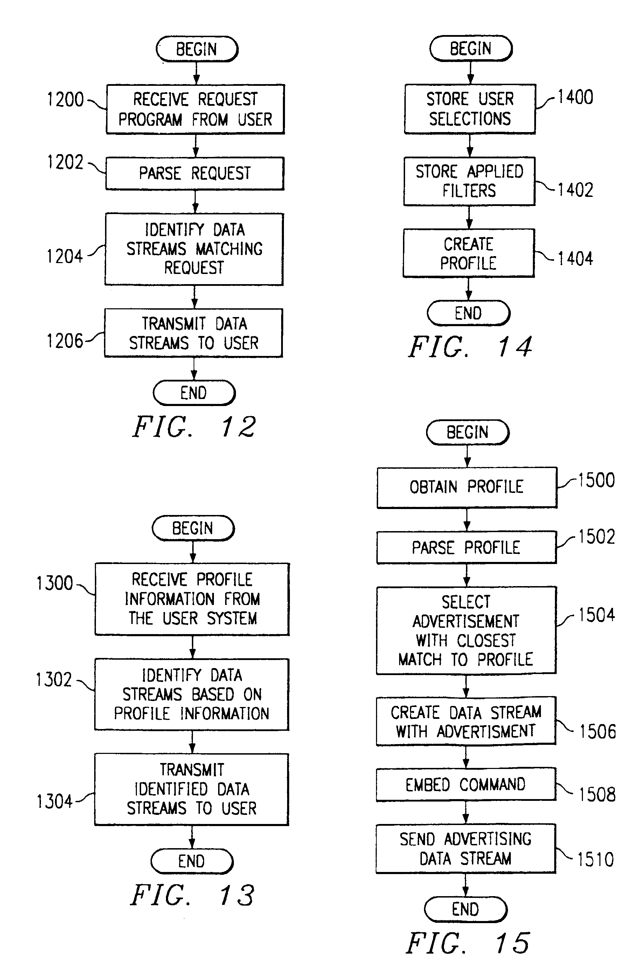

With reference now to **Figure 11**, a flowchart of a process for filtering data in accordance with a preferred embodiment of the present invention. This process may be used in a system at the user site to select and customize a program.

The process begins by receiving data streams (step **1100**). Thereafter, a user selection is received for the data streams (step **1102**). A determination is made as to whether additional user selections are to be made (step **1104**). If more user selections are to be made, the process returns to step **1102**. Otherwise, a filter is adjusted based on the user selection (step **1106**). This filter is used to select data streams received from a content provider for presentation. A determination is then made as to whether an embedded command is present in the data streams (step **1108**). This step may check data streams both selected and unsolicited by the user. Embedded commands may be used by the content provided to ensure that some data streams are presented to the user even though the user may not have selected these data streams for presentation. For example, if an important news event occurs, such as a dangerous storm, the content provider will want to make sure that this information is presented to the user. Also, data streams containing advertising may be presented to the user without the user selecting these data streams.

If an embedded command is present in a data stream, the filter is adjusted based on the embedded command (step **1110**). The data stream are then filtered using the adjusted filter (step **1112**). The filtered data streams are then presented (step **1114**). In this manner selected data streams may be presented to the user while unselected data streams are never presented to the user. Turning now to **Figure 12**, a flowchart of a process to customize a program for a user is depicted in accordance with a preferred embodiment of the present invention. This process may be used by a server or source for a content provider to receive customization requests for a program from various users.

The process begins by receiving a request for a program from a user (step **1200**). This request may be, for example, the profile from the user system. This profile may include, for example, data streams selected by the user, filters used, location information of the system, and even possibly demographic information for the user. The request is then parsed (step **1202**). Data streams matching the requests are identified (step **1204**). These data streams include those selected by the user, but also may include data streams selected by the content provider based on the choice of data streams in the request. These additional requests may be presented at the user system through embedded commands in the depicted examples. Thereafter, the data streams identified are transmitted to the user (step **1206**) with the process terminating thereafter.

With reference now to **Figure 13**, a flowchart of a process for retrieving user selection information is depicted in accordance with a preferred embodiment of the present invention. This process may be used by content provider to customize programming for a user without requiring the user to send requests to the content provider.

The process begins by retrieving a profile from the user system (step **1300**). Thereafter, data streams are identified based on the information from the profile (step **1302**). These identified data streams are then transmitted to the user (step **1304**). This collection of profile information from a user system is performed in real time in the depicted examples. The information may be collected as user selections are made and preferences are set. Alternatively, the information may be received on a periodic basis depending on the implementation. In this manner, up to date profiles are obtained from which data streams may be identified for transmission to the user from which the information was received. The content is tailored based on current selections and preferences by users. This information is better than demographic information because different users may use a particular multimedia system. Of course, demographic information may be used in conjunction with the profile information collected from users.

Turning now to **Figure 14**, a flowchart of a process for creating a profile is depicted in accordance with a preferred embodiment of the present invention. The process begins by storing user selections of data streams and preferences for presentation (step **1400**). Thereafter, filters applied by the user are stored (step **1402**). A profile is created with the stored information (step **1404**) with the process terminating thereafter. This profile also may include other information about the user, such as, for example, a location of the user system.

With reference next to **Figure 15**, a flowchart of a process for creating an advertising data stream is depicted in accordance with a preferred embodiment of the present invention. The process begins by obtaining a profile (step **1500**). This profile may be requested by the server or content provider or sent by the user as part of a request for programming. The profile is parsed to obtain user information in selecting an appropriate advertisement (step **1502**). Thereafter, this information is used to select an advertisement that is closest to matching the profile (step **1504**). A data stream is then created with the advertisement (step **1506**). A command is embedded in this data stream or in another data stream already being received or selected by the user (step **1508**). This embedded command is constructed such that the data stream containing the advertisement will be presented to the viewer even if the viewer has not elected to view such a data stream or even if the viewer has chosen to block out or turn off advertising data streams. The advertising data stream is then sent to the viewer (step **1510**) with the process terminating thereafter.

By targeting streaming media in this using the mechanism of the present invention, the amount of bandwidth needed to transmit customized programming is reduced. Furthermore, the present invention allows for targeting of streaming media based on profile information, which increases the effectiveness of the information. Not only can the correct audience for the information be found, but the best mode of presentation of the information can also be found. Based on a profile, information may be presented in different forms that the client can easily understand. For example, a person might be a viewer watching a football game with a statistic filter turned on and a filter giving information about a particular team or player. Targeted advertisement has more of an impact because not only are they targeted for the football viewer (as are conventional advertisement methods), but also for a football fan that responds to numbers (information inferred from the statistics filter in use by the fan), and a football fan that is a fan of a team or player (again inferred from the filter in use).

Also, by collecting profiles from clients, customer feedback can be supplied to vendors supplying the streaming media. That is to say, the consumption of media can be measured in real time allowing dynamic reconfiguration of broadcast material. For example, if more clients are receiving one media stream of a certain type more than others, then, perhaps, more variations of that type of stream should be made available. If more clients like factoids, then more time should be spent finding weird facts about the subject of the programming. If more people listen to different audio streams than watch video overlays, then it is justified to invest more money for audio streams.

Turning now to an example of the present invention in which the user profile is not provided directly via input or selection by a user. Consider, instead, a situation in which the user profile is created by the location of a user. For example, perhaps a person is driving in a car equipped with a global positioning system (GPS) such as The NorthStar System in which information on the current location is fed into the client as a filter preference. The parts of the map shown on a heads up display or an advertisement on an audio stream being received, using the present invention, may be based on the location as well as any other preferences. For example, a stream containing an advertisement for a restaurant or other attraction may be sent to the client when the car is within a specified distance from the restaurant or attraction.

Thus, the present invention provides a method and apparatus for allowing user customization of a program as well as reducing bandwidth required to deliver customized programs. By separating the broadcast of the programing to separate streams, media bandwidth in the broadcast medium is saved. For example, a television show has both sound and video in one stream. To broadcast a show in different languages, the same video is sent with different sound coupled to it. With separate streams of video and audio, one stream of video could support all the different audio streams. The "channel" could act like a filter choosing which audio stream to play along with the video. When X different language are supported by supplying an audio stream for each one and only one video stream, (X-1) times the size of the video is the savings in bandwidth.

It should be noted, that although described with reference to use of the streams by one device, the streams can be used by multiple devices as well. Such modification to the present invention will be obvious to those skilled in the art upon reading this description of the invention. Furthermore, streams can be grouped together for the user to select which streams a device or devices will use. Also the streams are not limited to audio or video, but may be included other types of information as well such as, for example, graphics and text.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media such a floppy disc, a hard disk drive, a RAM, and CD-ROMs and transmission-type media such as digital and analog communications links.

The description of the present invention has been presented for purposes of illustration and description, but is not intended to be exhaustive or limited to the invention in the form disclosed. Many modifications and variations will be apparent to those of ordinary skill in the art. It is important to note that while the present invention has been described primarily in terms of streaming media distributed through a network such as the Internet, the present invention, with appropriate modifications as will be obvious to those of ordinary skill in the art, may also be applied in other contexts such as in broadcast media such as conventional television and in other wireless communication systems employing such communication channels as satellite and microwave transmissions.

Additionally, although the examples are implemented through the transmission of multiple data streams, additional data streams may be embedded within the main or primary data stream or streams. For example, buffering of frames might be employed in which one frame out of every 31 frames contains the additional content. These frames may be buffered until the content is fully assembled and ready or triggered by some user input.

The embodiment was chosen and described in order to best explain the principles of the invention, the practical application, and to enable others of ordinary skill in the art to understand the invention for various embodiments with various modifications as are suited to the particular use contemplated.

## Claims

1. A method in a data processing system for targeting advertising to a multimedia system, the method comprising:
responsive to receiving user input from the multimedia system, selecting video streams and audio streams from a set of video streams and a set of audio streams for an event, wherein selected video streams and selected audio streams are formed;
selecting an advertisement from a set of advertisements based on the selected video streams and the selected audio streams to form a selected advertisement; and
sending the selected advertisement to the multimedia system.

2. The method of claim 1, wherein the user input is a profile.

3. The method of claim 1 or 2, wherein the step of selecting an advertisement includes:
determining a type of content within the selected video streams and selected audio streams; and
selecting an advertisement including the type of content.

4. The method of claim 3, wherein the selected video streams include a video stream providing statistical data and wherein the selected advertisement includes statistical data.

5. The method of claim 3, wherein the type of content is a selected person.

6. The method of claim 3, wherein the type of content is a subject matter of an event present by the selected video streams and the selected audio streams.

7. A data processing system for targeting advertising to a multimedia system, the data processing system comprising:
first selecting means, responsive to receiving user input from the multimedia system, for selecting video streams and audio streams from a set of video streams and a set of audio streams for an event, wherein the selected video streams and selected audio streams are formed;
second selecting means for selecting an advertisement from a set of advertisements based on the selected video streams and the selected audio streams to form a selected advertisement; and
sending means for sending the selected advertisement to the multimedia system.

8. The data processing system of claim 7, wherein the user input is a profile.

9. The data processing system of claim 7 or 8, wherein the means of selecting an advertisement includes:
determining means for determining a type of content within the selected video streams and selected audio streams; and
third selecting means for selecting an advertisement including the type of content.

10. The data processing system of claim 7, 8 or 9, wherein the selected video streams include a video stream providing statistical data and wherein the selected advertisement includes statistical data.

11. The data processing system of any one of claims 7 to 10, wherein the type of content is a selected person.

12. The data processing system of any one of claims 7 to 11, wherein the type of content is a subject matter of an event present by the selected video streams and the selected audio streams.

13. A computer program product in a computer readable medium for targeting advertising to a multimedia system, the computer program product comprising:
first instructions, responsive to receiving user input from the multimedia system, for selecting video streams and audio streams from a set of video streams and a set of audio streams for an event, wherein the selected video streams and selected audio streams are formed;
second instructions for selecting an advertisement from a set of advertisements based on the selected video streams and the selected audio streams to form a selected advertisement; and
third instructions for sending the selected advertisement to the multimedia system.
